(19) Europäisches Patentamt
European Patent Office
Office européen des brevets

(11) Publication number: 0 199 444
A1

(12) # EUROPEAN PATENT APPLICATION

(21) Application number: 86301608.5

(22) Date of filing: 06.03.86

(51) Int. Cl.⁴: H 01 B 7/28
C 08 K 5/54, H 01 B 3/44
H 01 B 3/46

(30) Priority: 12.03.85 GB 8506304

(43) Date of publication of application: 29.10.86 Bulletin 86/44

(84) Designated Contracting States: AT BE CH DE FR GB IT LI LU NL SE

(71) Applicant: BP Chemicals Limited
Belgrave House 76 Buckingham Palace Road
London, SW1W 0SU(GB)

(72) Inventor: Umpleby, Jeffrey David BP Chemicals (Suisse) SA
Chemicals & Plastics Lab. 11 Rue de Veyrot
Box 149 CH-1217 Meyrin 2(CH)

(74) Representative: Denbigh, Keith Warwick et al,
BP INTERNATIONAL LIMITED Patents Division Chertsey Road
Sunbury-on-Thames Middlesex, TW16 7LN(GB)

(54) **Polymer composition.**

(57) Polymer composition suitable for use as cable insulation and exhibiting a reduced tendency to form water-trees under the influence of medium or high voltage, the composition comprising a polymeric component, for example polyethylene or ethylene copolymer and, as a water-tree retardant, a defined organo-silicon compound having at least one substituent comprising a chain of three amino-alkyl units.

EP 0 199 444 A1

POLYMER COMPOSITION

The present invention relates to polymer compositions suitable for use particularly in the field of wire and cable insulation and to a process for the production of such compositions. More particularly the invention relates to polymer compositions which exhibit a reduced tendency to form water trees when employed as medium and high voltage electrical insulation.

Polymer compositions employed as insulation for medium and high voltage wire and cable are well known. Generally such compositions are based on polyolefins such as for example low density (high pressure) polyethylene, low density (high pressure) ethylene copolymers and linear low density polyethylene. Such materials may be employed as insulation in crosslinked or uncrosslinked form. A problem associated with the application of these polymeric compositions as medium or high voltage insulation is their tendency to failure under certain conditions due to a phenomenon known as "water tree growth" in the insulation. Water tree growth is generally found to occur most frequently in wire and cable insulation situated in damp locations and the phenomemon can lead to electrical power leakage or complete breakdown of the insulation.

A number of proposals for retarding the growth of water trees are suggested in the prior art. DT-A-2737430 describes an insulation composition having reduced tendency to form water trees comprising a polyolefin and an alkoxy silane. GB-A-2055854 describes a polymeric composition for electrical insulation comprising a polymeric component, from 0 to 10 weight % of filler

and, as water treeing and electrical treeing inhibitor for the composition, at least one defined organic silicon compound which can be, for example, vinyl-tris-(2-methoxyethoxy) silane.

US-A-4543381 relates to a polymeric composition having enhanced reistance to water treeing and electrical treeing consisting essentially of a homogeneous mixture of a polymeric component and a water treeing and electrical treeing inhibitor consisting essentially of (1) a defined silane compound and (2) an unsubstituted or aryl substituted $C_{10}$ to $C_{20}$ fatty acid. The preferred silane compounds are methyl-tris(2-phenoxyethoxysilane and vinyl-tris(2-phenoxyethoxy)silane. The fatty acid component is preferably stearic acid, phenyl-stearic acid or tolyl-stearic acid.

It is an object of the present invention to provide a composition suitable for use as insulation having improved water treeing resistance.

Accordingly the present invention provides a composition suitable for use as electrical insulation comprising a polymeric component and, as water tree growth retardant, one or more componds having the general formula:

$$RR^1N(CH_2)_pNR^2(CH_2)_qNR^3R^4$$

or partially condensed derivatives thereof, wherein the groups R, $R^1$, $R^2$, $R^3$ and $R^4$ are selected from $-(CH_2)_mSi\ Y^1Y^2Y^3$ and hydrogen and p and q are each from 2 to 4 with the proviso that at least one of the groups R, $R^1$, $R^2$,$R^3$ or $R_4$ is $-(CH_2)_mSiY^1Y^2Y^3$, and wherein m is 1 to 18, $Y^1$ is a hydrocarbyl or hydrocarbyloxy group containing 1-18 carbon atoms and $Y^2$,$Y^3$ are hydrocarbyloxy groups containing 1-18 carbon atoms.

The present invention further provides a process for preparing a composition suitable for use as electrical insulation comprising mixing together a polymeric component, and as a water tree growth retardant, one or more compounds having the general formula:

$$RR^1N(CH_2)_pNR^2(CH_2)_qNR^3R^4$$

or partially condensed derivatives thereof, wherein R, $R^1$, $R^2$, $R^3$, $R^4$, p and q are as defined above, the mixing being carried out under conditions such that polymeric component and the water tree growth

retardant form a substantially homogeneous blend.

Water tree growth retardant compounds preferred for use in the composition of the present invention are those wherein at least three of the groups R, $R^1$,$R^2$,$R^3$ and $R^4$ are hydrogen and not more than two of these groups are $-(CH_2)_mSiY^1Y^2Y^3$ (hereinafter referred to as the silane group). Most preferably four of the groups R, $R^1$, $R^2$, $R^3$ and $R^4$ are hydrogen and the fifth group is the silane group. Preferred combinations of silane groups/hydrogen in the defined formula are as follows:-

(1) $R^3$ = silane group; R, $R^1$,$R^2$,$R^4$ = H

(2) $R^1$,$R^3$ = silane groups; R, $R^2$, $R^4$ = H

(3) $R^3$,$R^4$ = silane groups; R, $R^1$,$R^2$ = H

(4) $R^2$,$R^3$ = silane groups; R, $R^1$,$R^4$ = H.

It is preferred to use the defined water tree retardant compounds wherein m is in the range 1 to 12, most preferably in the range 2 to 6. Preferably p and q are both equal to 2. $Y^1$,$Y^2$ and $Y^3$ are preferably alkoxyl groups containing 1 to 10 carbon atoms, most preferably 1-6 carbon atoms. Methoxyl, ethoxyl and normal- or isopropoxyl groups are particularly preferred. An example of a particularly preferred compound is

$H_2NCH_2CH_2NHCH_2CH_2NHCH_2CH_2CH_2Si(OCH_3)_3$,

(i.e. $N^1$-(beta-aminoethyl)-N-(beta-aminoethyl)-gamma-aminopropyltrimethoxysilane).

Partially condensed derivatives of the defined water tree growth retardant are also effective in inhibiting water-treeing in the composition of the present invention. The condensed derivatives are formed by partial hydrolysis of one or more of the hydrocarbyloxy groups and elimination of the corresponding hydrocarbinol. An example of such partial hydrolysis is represented by the following reaction:

$2\ Z-(CH_2)_3Si(OCH_3)_3 + H_2O$ reacts to form:

$Z-(CH_2)_3Si(OCH_3)_2O(OCH_3)_2Si(CH_2)_3- Z + 2\ CH_3OH$

wherein Z is a $RR^1N(CH_2)_pNR^2(CH_2)_qNR^4$ - group.

The condensed molecules contain the siloxane linkage SiOSi. The condensation step can be repeated several times to form a longer

chain.

The quantity of water tree retardant employed in the composition of the present invention suitably lies in the range 0.01to 5.0 weight%, preferably 0.5 to 3.0 weight%, most preferably 0.7 to 2.0 weight% based on the total weight of the composition.

The polymeric component employed as the insulating material in the composition of the present invention can be, for example, low density polyethylene (LDPE) or copolymers of ethylene with alkyl acrylate, alkyl methacrylate, or vinyl acetate; linear ethylene polymers or copolymers (eg LLDPE); or blends of the aforesaid polymers. Particularly preferred as the polymeric component are LDPE, ethylene/ethylacrylate copolymer (EEA), ethylene/butyl acrylate, ethylene/vinyl acetate copolymer (EVA) and linear low density polyethylene or blends of two or more thereof. Particularly preferred blends are LLDPE/LDPE, blends of EEA or ethylene/butyl acrylate copolymer with LDPE, LLDPE or LDPE/LLDPE and blends of EVA with LDPE, LLDPE or LDPE/LLDPE. The ethylene/alkylacrylate or ethylene/vinyl acetate copolymers preferably contain from 1 to 30 weight% of copolymerised alkyl acrylate or vinyl acetate units based on weight of the copolymer. A particularly preferred polymeric component is ethylene/ethylacrylate copolymer or a blend of LDPE with ethylene/ethylacrylate copolymer wherein the total ethylacrylate content in the component lies in the range 0.5 to 5 wt%. The aforesaid polymers or blends can also contain other suitable insulating polymeric materials, for example, high density polyethylene or polypropylene. The melt index of the polymeric component (prior to any crosslinking) suitably lies in the range 0.1 to 10 as measured by ASTM D 1238 (2.16 Kg/190°).

The polymer compositions of the present invention are preferably free from filler materials.

The compositions of the present invention can be crosslinkable or uncrosslinkable. By "crosslinkable" is meant that the composition can contain a chemical crosslinking agent. Uncrosslinkable compositions do not contain a chemical crosslinking agent but they can be crosslinked, eg by the use of ionising

radiation, subsequent to forming into useful articles if desired.

Crosslinkable compositions in accordance with the present invention suitably comprise the polymeric component, the defined water tree retardant and a peroxide (or hydroperoxide) crosslinking agent.

Examples of peroxide crosslinking agents suitable for use in the present invention are dicumyl peroxide, 2.5-bis(tertiary butyl peroxy)-2,5-dimethyl hexane, di-tertiary butyl peroxide, benzoyl peroxide, tertiary butyl cumyl peroxide, 2.5-bis(tertiary butyl peroxy)-2,5-dimethyl hexyne and bis (tertiary butyl peroxy) disopropyl benzene. The quantity of organic peroxide for use in the crosslinkable composition of the present invention is suitably 0.3 to 10.0 wt%, preferably 0.5 to 5.0 wt% based on the total composition. It will be understood that the peroxide is suitably selected so that it has a relatively long half life (eg greater than 0.5 hours) at the processing temperature but a relatively short half life (eg less than 10 minutes) at the temperature employed during the subsequent curing step.

The composition of the present invention can be prepared using techniques well known in the art to produce homogeneous dispersions of polymeric materials. The mixing is preferably carried out at a temperature such that the polymeric material is in the form of a melt. When the polymeric component is employed in the form of granules (e.g. pellets or powder) the mixing can be carried out, if desired, by contacting the granules with the water tree growth retardant, optionally with one or more other additives, e.g. antioxidant, under conditions which lead to absorption of the additives by the polymer. Preferably the compound employed as water tree growth retardant is above its melting temperature during the mixing. The components can be mixed, for example, using multi-roll mills, screw mills, continuous mixers, extruders, compounding extruders or Banbury mixers. Minor amounts of other additives, for example, antioxidant, plasticers or processing aids, metal deactivators, pigments, heat and light stabilizers and antistatic agents can be incorporated if desired.

The compositions of the present invention find use primarily as wire and cable insulation, particularly in medium and high voltage applications. The insulation can be applied to the wire and cable using conventional coating techniques, eg extrusion coating.

The present invention is illustrated in the following Examples and Comparative Tests.

Example 1

The following Table 1 illustrates the water tree growth properties of an unmodified conventional high pressure low density polyethylene (LDPE) insulation and the same LDPE containing quantities of water tree growth retardent compound (A). The polymer and the compound (A) were blended at 200°C to form a homogeneous mixture and test specimens were moulded from the mixture. Compound (A) comprises:

$H_2NCH_2CH_2NHCH_2CH_2NH(CH_2)_3Si(OCH_3)_3$.

The relative water tree growth rate (WTGR) was determined after the insulation had been held at 5KV/6kHz for 72 hours at 65°C. This method for determining WTGR is described by A.C. Ashcraft in the paper "Water treeing in Polymeric Dielectrics", World Electrical congress in Moscow, June 22, 1984.

Table 1

| Test | Polymer | Wt % of Additive (A) | WTGR(%) |
|---|---|---|---|
| Comparison | LDPE | none | 100 |
| Invention | LDPE | 0.5 | 28 |
| Invention | LDPE | 1.0 | 11 |
| Invention | LDPE | 2.0 | 8 |

Example 2

Table 2 illustrates the relative water tree growth rate (determined as in Example 1) for crosslinked insulation prepared from two commercial crosslinkable grades of polyethylene (BP Chemicals grades HFDM 4201 and BPH4201). Tests 1 and 2 show the WTGR for the polyethylene without water tree growth retardant additive. Test 3 shows the use of an additive in accordance with the present invention and Test 4 shows the use of an additive having

somewhat similar chemical formula but which is not in accordance with the present invention. The compositions were in each case prepared by blending at 200°C the base polymer with additive (when used) and conventional antioxidant to form a homogeneous mixture which was then pelleted. The pellets together with 2 weight percent dicumyl peroxide were then extruded and crosslinked at 180-200°C to form moulded test specimens.

Table 2

| Test | Polymer | Additive (wt%) | WTGR (%) | *Breakdown (hours) |
|---|---|---|---|---|
| 1 | HFDM4201 | none | 100 | - |
| 2 | BPH4201 | none | 25 | 500-1300 |
| 3 | BPH 4201 | 1.0 (A) | 5-10 | above 5000 |
| 4 | BPH 4201 | 1.0 (B) | 24 | - |

*Breakdown is the time taken for the insulation sample to fail at 20kV/50Hz.

Compound (B) is:

N-beta-(aminoethyl)-gamma-aminopropyltrimethoxy silane (i.e. $NH_2(CH_2)_2NH(CH_2)_3Si(OCH_3)_3$).

Claims:

1. A composition suitable for use as a electrical insulation comprising a polymeric component and, as water tree growth retardant, one or more compounds having the general formula:

$$RR^1N(CH_2)_pNR^2(CH_2)_qNR^3R^4$$

or partially condensed derivatives thereof, wherein the groups R, $R^1$, $R^2$, $R^3$ and $R^4$ are selected from $-(CH_2)_mSi\ Y^1Y^2Y^3$ and hydrogen and p and q are each from 2 to 4 with the proviso that at least one of the groups R, $R^1$, $R^2$, $R^3$ or $R^4$ is $-(CH_2)_mSiY^1Y^2Y^3$, and wherein m is 1 to 18, $Y^1$ is a hydrocarbyl or hydrocarbyloxy group containing 1-18 carbon atoms and $Y^2$, $Y^3$ are hydrocarbyloxy groups containg 1-18 carbon atoms.

2. A composition as claimed in claim 1 wherein at least three of the groups R, $R^1$, $R^2$, $R^3$ and $R^4$ are hydrogen and not more than two of the groups are $-(CH_2)_mSiY^1Y^2y_3$ groups.

3. A composition as claimed in claim 1 wherein when $R^3$ is the silane group $-(CH_2)_mSiY^1Y^2Y^3$ then R, $R^1$, $R^2$, and $R^4$ are hydrogen; or when $R^1$ and $R^3$ are the said silane groups then R, $R^2$ and $R^4$ are hydrogen; or when $R^3$ and $R^4$ are the said silane groups then R. $R^1$ and $R^2$ are hydrogen; or when $R^2$ and $R^3$ are the said silane groups then R, $R^1$ and $R^4$ are hydrogen.

4. A composition as claimed in claim 1 wherein the defined compound employed as water tree growth retardant is

$$H_2NCH_2CH_2NHCH_2CH_2NHCH_2CH_2CH_2Si(OCH_3)_3$$

5. A composition as claimed in any one of the preceding claims wherein the quantity of the defined compound employed as water tree

growth retardant lies in the range 0.5 to 3.0 weight % based on the total weight of the composition.

**6.** A composition as claimed in any one of the preceding claims wherein the polymeric component is selected from low density polyethylene, ethylene/ethyl acrylate copolymer, ethylene/butyl acrylate copolymer, ethylene/vinyl acrylate copolymer and linear low density polyethylene or blends of two or more thereof.

**7.** A composition as claimed in any one of the preceding claims being a composition free from filler materials.

**8.** A composition as claimed in any one of the preceding claims comprising 0.5 to 5.0 wt % based on the total composition of an organic peroxide as crosslinking agent.

**9.** A process for preparing the composition claimed in any one of the preceding claims comprising mixing together the polymeric component and the defined compound employed as a water tree growth retardant, the mixing being carried out under conditions such that the polymeric component and the defined compound form a substantially homogeneous blend.

**10.** A process as claimed in claim 9 wherein the mixing is carried out at a temperature above the melting temperature of the polymeric component.

**11.** A process as claimed in claim 9 wherein the polymeric component is in granular form and is mixed with the water tree growth retardant under conditions which lead to its absorption by the polymeric component.

**12.** A process for manufacturing insulated cable comprising extrusion-coating a wire or cable with the composition claimed in any one of claims 1 to 8.

European Patent Office

# EUROPEAN SEARCH REPORT

0199444

Application number

EP 86 30 1608

## DOCUMENTS CONSIDERED TO BE RELEVANT

| | Category | Citation of document with indication, where appropriate, of relevant passages | Relevant to claim | CLASSIFICATION OF THE APPLICATION (Int Cl 4) |
|---|---|---|---|---|
| | | | | H 01 B 7/28<br>C 08 K 5/54<br>H 01 B 3/44<br>H 01 B 3/46 |
| 1 | A | US-A-4 299 713 (M.F. MARINGER et al.)<br>* Claims 1-42 * & GB - A - 2 055 854 (Cat. D)<br>--- | 1,6,9 | |
| 5 | A | EP-A-0 126 577 (COMMSCOPE CO.)<br>* Claims 1-20 *<br>--- | 1 | |
| 1 | A | EP-A-0 023 239 (UNION CARBIDE)<br>* Claims 1-11 *<br>--- | 1,6,9 | |
| 1 | A | GB-A-2 128 622 (NATIONAL DISTILLERS)<br>* Claims 1-21 *<br>--- | 1,6,9 | |
| 1 | A | FR-A-2 353 119 (COMPAGNIE GENERALE D'ELECTRICITE)<br>* Claims 1-9 *<br>----- | 1,5,6,9 | **TECHNICAL FIELDS SEARCHED (Int. Cl.4)**<br>H 01 B 7/00<br>H 01 B 3/00<br>C 08 K 5/00 |

The present search report has been drawn up for all claims

| Place of search | Date of completion of the search | Examiner |
|---|---|---|
| THE HAGUE | 04-06-1986 | DROUOT M.C. |

**CATEGORY OF CITED DOCUMENTS**

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82